# EUROPÄISCHE PATENTSCHRIFT

(11) **EP 3 201 159 B1**
(45) Veröffentlichungstag und Bekanntmachung des Hinweises auf die Patenterteilung: **17.04.2019**
(21) Anmeldenummer: 15795108.8
(22) Anmeldetag: 30.09.2015
(51) Int. Cl.: C05D 1/02, C01D 5/00, C05D 1/00, C05G 3/00

(54) **VERFAHREN ZUR HERSTELLUNG VON KALIUMSULFAT-GRANULATEN UND DAS HIERAUS ERHALTENE KALIUMSULFAT-GRANULAT SOWIE DESSEN VERWENDUNG**
METHOD FOR THE PRODUCTION OF SULPHATE OF POTASH GRANULATES, SULPHATE OF POTASH GRANULATE OBTAINED THEREBY, AND USE THEREOF
PROCÉDÉ DE FABRICATION DE GRANULATS DE SULFATE DE POTASSIUM ET GRANULAT DE SULFATE DE POTASSIUM OBTENU D'APRÈS LEDIT PROCÉDÉ AINSI QUE SON UTILISATION

(30) Priorität: 30.09.2014 DE 102014014100
(43) Veröffentlichungstag der Anmeldung: 09.08.2017
(73) Patentinhaber: K+S KALI GmbH, 34131 Kassel (DE)
(72) Erfinder: BAUCKE, Guido, 36277 Schenklengsfeld OT Wippershain (DE); MÜLLER-GOLDKUHLE, Marcel, 45138 Essen (DE); DIETRICH, Armin, 37299 Weißenborn (DE); REST, Torsten, 36266 Heringen (DE); KEIDEL, Roland, 36100 Petersberg-Steinau (DE); WALDMANN, Ludger, 48291 Telgte (DE)
(74) Vertreter: Dressel, Stefan
(86) Internationale Anmeldenummer: PCT/DE2015/000497
(87) Internationale Veröffentlichungsnummer: WO 2016/050235

(56) Entgegenhaltungen:
- DE-C1- 4 232 567
- US-A- 3 502 272
- US-A- 3 513 230
- US-A1- 2006 010 948
- ZA-A- 9 906 524

## Beschreibung

Die vorliegende Erfindung betrifft ein Verfahren zur Herstellung von Kaliumsulfat-Granulaten und das hieraus erhaltene Kaliumsulfat-Granulat sowie dessen Verwendung.

Kaliumsulfat auch bezeichnet als SOP (sulphate of potash) kommt in der Natur nur gelegentlich in reiner Form (als Arcanit) vor. Kaliumsulfat ist aber in Form von sogenannten Doppelsalzen in verschiedenen Mineralien, wie beispielsweise Schönit, Leonit, Langbeinit, Polyhalit und Glaserit enthalten. Industriell kann Kaliumsulfat beispielsweise mit dem Mannheim-Verfahren, oder aus Kaliumchlorid und Kieserit hergestellt werden, siehe hierzu auch Winnacker, Küchler, WILEY VCH Verlag, Band 8, 2005, S. 91f. In der Landwirtschaft findet Kaliumsulfat Verwendung als Bestandteil von sogenannten Kalidüngern. Kaliumsulfat kombiniert die wesentlichen Nährstoffe Kalium und Sulfat in einer optimalen Form miteinander, welche gut wasserlöslich sind und somit nach Ausbringen in der Form von Dünger für die Pflanze schnell verfügbar sind und von dieser direkt aufgenommen werden können.

Mineraldünger werden häufig als Granulat eingesetzt, da sie in dieser Form vorteilhafte Handhabungseigenschaften aufweisen. So neigen Granulate im Vergleich zu den entsprechenden feinzerteilten, pulverförmigen Mineraldüngern in sehr viel geringerem Maße zu Staubbildung, sind lagerstabiler, hygroskopisch beständiger und lassen sich leichter und gleichmäßiger durch Streuen ausbringen und dosieren. Zudem sind auf Freiflächen aufgetragene Granulate auch weniger anfällig gegen Windverwehungen.

Unter Granulierung wird eine Zusammenführung von Pulver- oder Feinpartikeln zu größeren Partikeleinheiten, sogenannten Granulaten, verstanden. Insbesondere werden darunter Verfahren zur Press- und Aufbauagglomeration sowie verwandte Verfahren verstanden, bei denen disperse feste Primärteilchen unter Kornvergrößerung zusammengelagert werden. Granulierungen werden häufig in Gegenwart von Bindemitteln vorgenommen. Dabei handelt es sich um flüssige oder feste Stoffe, deren Haftkräfte einen Zusammenhalt zwischen den Partikeln erzeugen. Die Verwendung solcher Bindemittel ist erforderlich, falls die Granulierung der Partikel ohne diese zu keinem ausreichend stabilen Granulat führt. Bekannte Bindemittel sind z.B. Wasser, Gelatine, Stärke, Ligninsulfonate, Kalkhydrate und Melasse. Die Wahl des Bindemittels kann die Eigenschaften der Agglomerate, insbesondere ihre mechanische Festigkeit (z.B. Abrieb, Bruch- oder Berstfeste), hygroskopische Beständigkeit und Staubneigung, maßgeblich beeinflussen.
Eine Granulierung kann beispielsweise mittels einer Walzenpresse erfolgen. Bei dieser Art der Pressagglomeration oder auch Pressgranulierung genannt werden die Pulver- oder Feinpartikel zwischen zwei gegenläufigen Walzen, die in einer Rahmenkonstruktion verspannt sind, verdichtet bzw. kompaktiert. Häufig ist hierbei eine der Walzen als Fest- und die andere als Loswalze ausgeführt. Diese Loswalze wird in der Regel durch eine hydraulische Anpressvorrichtung derart abgestützt, dass die während des Pressvorgangs applizierte Kraft exakt eingestellt werden kann. Die dabei verwendete Gesamtpresskraft wird häufig auch zur Arbeitsbreite der Walzen ins Verhältnis gesetzt und als Spezifische Presskraft oder Linienkraft in z.B. N/cm angegeben.
Als Dosiereinheit, um das zu kompaktierende Gut gezielt in den Walzenspalt zu fördern, werden Schwerkraft- oder Schneckenzuteiler verwendet.
Das zu kompaktierende Gut wird zu Schülpen verpresst. Um Granalien einer definierten Korngröße zu erhalten, folgt nach dem Kompaktiervorgang eine Zerkleinerung der Schülpen mittels Mühlen. In der nachfolgenden Klassierung wird Fein- und Überkorn abgetrennt und so das gewünschte Korngrößenspektrum erhalten.
Aus dem Stand der Technik sind Verfahren zur Granulierung von Kaliumsulfat-Pulver/ Feinpartikeln bekannt.

Die DE 2810640 C2 beschreibt ein Granulierverfahren, bei dem die Temperatur eines feinkörnigen, Kalium- oder Ammoniumsalze enthaltenden Materials vor dem Pressen auf 40 bis 50°C eingestellt und das Material anschließend verpresst wird. Die mit diesem Granulierverfahren erzielten mechanischen Festigkeiten sind noch verbesserungswürdig.

Die WO 2007/071175 beschreibt ein Verfahren zur Herstellung von granuliertem Kaliumsulfat mit Maisstärke als Bindemittel.

Ein Verfahren und eine Versuchsanlage zur Granulierung von Kaliumsulfat ist aus "Die Granulierung von Kaliumsulfat", A. Hollstein, Kali u. Steinsalz, Bd. 7 (1979) Heft 12, bekannt. Die Zugabe von Wasser und/oder Dampf vor dem Pressspalt ist genannt. Die hergestellten Produkte weisen noch verbesserungswürdige Festigkeitseigenschaften auf.

Weitere Herstellungsverfahren der Kaliumsulfathaltigen Granulate werden im US 2006/010948, ZA 9906524, DE 4232567, US 3502272 und US 3513230 offenbart.

Zur Verringerung der durch Abrieb bedingten Staubbildung werden im Stand der Technik mineralöl-, pflanzenöl-, glyzerin- oder polyethylenglykolhaltige Zusammensetzungen vorgeschlagen.

Der Erfindung liegt die Aufgabe zu Grunde, ein Verfahren zur Granulierung von Salzmischungen aus Kaliumsulfat mit den unten genannten Anteilen bereitzustellen. Die mit diesem Verfahren hergestellten Granulate sollen über eine verbesserte mechanische Stabilität verfügen und sich insbesondere durch eine hohe Berstfestigkeit und einen geringen Abrieb auszeichnen.

Überraschenderweise wurde gefunden, dass die gestellte Aufgabe gelöst wird durch Granulieren einer im Wesentlichen aus Kaliumsulfat und Kaliumchlorid bestehenden Mischung unter Zusatz von Wasser, wobei das Kaliumchlorid in einer Menge von 1,8 bis 4,5 Gew.-%, besonders bevorzugt 2,5 bis 4,3 Gew.-%, gerechnet als Gewichtsanteil des eingesetzten Kaliumchlorids jeweils bezogen auf das eingesetzte Kaliumsulfat, eingesetzt wird, wobei die Kompaktierung als Pressagglomeration durchgeführt wird.

Das erfindungsgemäße Verfahren zur Herstellung von Kaliumsulfat-Granulaten erlaubt gegenüber konventionellen Verfahren eine Produktion von Kaliumsulfat-Granulaten, bei denen die Granalien schneller aushärten, d.h. die Reifezeit der Granalien wird verringert. Die so erhaltenen Granulate weisen gleichbleibende Partikelgrößenverteilungen und Dichten auf, besitzen die geforderten guten Stabilitätseigenschaften, insbesondere eine gute mechanische Stabilität wie Bruchstabilität und/oder geringen Abrieb und können überwiegend beschädigungsfrei gehandhabt und gemischt werden.

Gegenstand der Erfindung ist daher ein Verfahren zur Herstellung von Kaliumsulfat-Granulaten, umfassend die Granulierung von Kaliumsulfat, dadurch gekennzeichnet dass dem Kaliumsulfat während des Granulierens ein Kaliumchlorid und/oder eine wässrige Kaliumchloridlösung zugesetzt wird.

Ein weiterer Gegenstand der Erfindung ist Kaliumsulfat-Granulat, mit einem Kaliumchlorid-Gehalt im Bereich von 1,8 bis 4,5 %, erhältlich durch das erfindungsgemäße Verfahren.

Ein weiterer Gegenstand der Erfindung ist die Verwendung von festem feinen Kaliumchlorid und / oder wässriger Kaliumchloridlösung zur Verbesserung der mechanischen Eigenschaften von Kaliumsulfat-Granulaten, insbesondere zur Erhöhung der Berstfestigkeit und/oder zur Erhöhung der Abriebfestigkeit.

Erfindungsgemäß sind sowohl das Kaliumchlorid mit Wasser/Wasserdampf und / oder die Kaliumchloridlösung während des Granuliervorgangs zugegen. Dies kann dadurch erreicht werden, dass das Kaliumchlorid mit dem zu granulierenden Kaliumsulfat vermischt und anschließend oder auch gleichzeitig mit Wasser und/oder Wasserdampf befeuchtet wird. Anstelle von Wasser kann auch eine wässrige Kaliumchloridlösung verwendet werden.

Die Zugabe dieser Additive zum Kaliumsulfat kann in einem der Presse vorgeschalteten Mischer, einem Förderorgan und/oder im Aufgabeschacht bzw. der Zuteilvorrichtung der Walzenpresse erfolgen.

In einer Ausführungsform wird die Gesamtmenge des Kaliumchlorids in Form einer wässrigen Lösung zugegeben.

In einer weiteren Ausführungsform wird KCI in einem festen Aggregatzustand und als KCI-Lösung zugegeben.

Im Rahmen der vorliegenden Erfindung wird unter Nachbehandlung eine der Klassierung nachgeschaltete Zugabe von Wasser oder einer wässrigen Lösung auf das Granulat verstanden.

Die Durchführung der Granulierung des erfindungsgemäßen Verfahrens erfolgt in Analogie zu aus dem Stand der Technik bekannten Agglomerationsverfahren erfolgen, die beispielsweise in Wolfgang Pietsch, Agglomeration Processes, Wiley-VCH, 1. Auflage, 2002, sowie in G. Heinze, Handbuch der Agglomerationstechnik, Wiley-VCH, 2000, beschrieben sind, der Pressagglomeration.

Die Granulierung gemäß des erfindungsgemäßen Verfahrens wird als Pressagglomeration durchgeführt.

Bei der Durchführung als Pressagglomeration erfolgt die Granulierung durch Verpressen der Kaliumsulfat und Kaliumchlorid enthaltenden Salzmischung in Gegenwart von Wasser und/oder Wasserdampf. Das Kaliumchlorid kann als Feststoff und/oder in Form einer wässrigen Lösung zugegeben werden.
Die KCI-Zugabe sollte bevorzugt möglichst kurz vor dem Pressen erfolgen.

In einer bevorzugten Ausführungsform der Erfindung wird das Kaliumsalz in Form eines Staubs mit einer maximalen Partikelgröße von 200 µm oder in Form einer wässrigen Lösung zugesetzt.

In einer weiteren bevorzugten Ausführungsform der Erfindung wird ein Teil des Kaliumsalzes in Form eines Staubs mit einer maximalen Partikelgröße von 200 µm und die Restmenge des Kaliumsalzes in Form einer wässrigen Lösung zugesetzt.

In einer bevorzugten Ausführungsform der Erfindung besteht das für die Granulierung verwendete Kaliumsulfat zu mindestens 90 Gew.-% aus Partikeln, die einen Durchmesser kleiner als 2,0 mm und insbesondere kleiner als 1,0 mm haben. Vorzugsweise haben wenigstens 90 Gew.-% des Kaliumsulfats eine Partikelgröße im Bereich von 0,01 bis 2,0 mm und bevorzugt 0,02 bis 1,0 mm. Der d₅₀-Wert der zur Granulierung eingesetzten Kaliumsulfatpartikel (Gewichtsmittel der Partikelgröße) liegt in der Regel im Bereich von 0,05 bis 1,1 mm und insbesondere im Bereich von 0,1 bis 0,7 mm.
Die hier und im Folgenden angegebenen Partikelgrößen können bis zu einer Partikelgröße im Bereich von größer 150 µm durch Siebanalyse und bei kleineren Partikelgrößen durch Laserbeugungsmethoden bestimmt werden.

In der Regel weisen wenigstens 90 Gew.-% des partikulären Kaliumchlorid in Form eines Staubs eine Partikelgröße von kleiner als 0,2 mm und insbesondere kleiner als 0,1 mm auf. Vorzugsweise liegt die Größe der Partikel von wenigstens 90 Gew.-% des partikulären Kaliumsalzes im Bereich von 0,01 bis 0,2 mm und bevorzugt 0,02 bis 0,1 mm. Der d₅₀-Wert der zur Granulierung eingesetzten Kaliumsalzpartikel (Gewichtsmittel der Partikelgröße) liegt in der Regel im Bereich von 0,01 bis 0,2 mm. Natürlich kann das Kaliumchlorid als Feststoff mit größerer Partikelgröße eingesetzt werden - die Partikelgröße sollte nur so gewählt sein, dass eine gleichmäßige Verteilung im Granulat sichergestellt ist.

In einer Ausführungsform der Erfindung weist das Kaliumchlorid in Form eines Staubs eine Schüttgutdichte im Bereich von 250 bis 1300 kg/m³ auf.

Das Kaliumchlorid wird in einer Menge von 1,8 bis 4,5%, besonders bevorzugt 2,5 bis 4,3%, gerechnet als Gewichtsanteil Kaliumchlorid, jeweils bezogen auf das eingesetzte Kaliumsulfat, eingesetzt.

In einer bevorzugten Ausführungsform der Erfindung ist die Menge an zugesetztem Wasser vor oder während des Pressvorgangs im Bereich von 0,1 bis 2,5 % (Gewichts%), vorzugsweise im Bereich von 0,1 bis 1,5 %, besonders bevorzugt im Bereich von 0,3 bis 1,2 % und/oder nach dem Pressvorgang im Bereich von 0,1 bis 2,5 %, vorzugsweise im Bereich von 0,1 bis 1,5 %, besonders bevorzugt im Bereich von 0,1 bis 1,2 %. Die gesamte Menge an zugesetztem Wasser beträgt maximal 3,5 %, jeweils bezogen auf wasserfreies Kaliumsulfat. Dabei ist die Wasseraufgabe nach dem Pressvorgang optional.

In einer bevorzugten Ausführungsform der Erfindung umfasst die Pressagglomeration ein Kompaktieren des Gemischs aus Kaliumsulfat, Kaliumchlorid und Wasser mit einer Walzenpresse bei einer spezifischen Linienkraft im Bereich von 30 bis 100 kN/cm, vorzugsweise im Bereich von 40 bis 80 kN/cm, besonders bevorzugt im Bereich von 45 bis 75 kN/cm, bezogen auf 1000 mm Walzendurchmesser und eine mittlere Schülpendicke von 10 mm.

Im Rahmen der Erfindung wird unter der spezifischen Linienkraft eine Kraft bezogen auf eine Längeneinheit verstanden. Die Linienkraft wirkt entlang einer gedachten Linie entlang der Presswalzenbreite. Die spezifische Linienkraft wurde bei Presswalzendurchmessern von 1000 mm und erzielten mittleren Schülpendicken von 10 mm ermittelt.

In einer weiteren Ausführungsform der Erfindung wird die Schülpe nach dem Pressvorgang, insbesondere nach und / oder während der Zerkleinerung und / oder Klassierung mit Wasser befeuchtet. Dabei liegt die Menge an zugesetztem Wasser nach dem Pressvorgangs bevorzugt im Bereich von 0,1 bis 2,5 %, vorzugsweise im Bereich von 0,1 bis 1,5 %, besonders bevorzugt im Bereich von 0,3 bis 1,2%. Die gesamte Menge an zugesetztem Wasser beträgt maximal 3,5 %, jeweils bezogen auf wasserfreies Kaliumsulfat. Auch bei einer Nachbehandlung des bereits vorliegenden Granulates, z.B. auf einem Reifeband oder in einem Mischer, kann das Wasser zugegeben werden.

Im Rahmen der vorliegenden Erfindung kann die Gesamtmenge an Wasser bei dem Granulieren einmalig zugegeben werden, oder die Wasserzugabe kann auch in Teilmengen vor, während und/oder nach dem Pressvorgang durchgeführt werden. Unter "nach dem Pressvorgang" wird im Rahmen der vorliegenden Erfindung eine Wasserzugabe wie beispielsweise ein Besprühen der hergestellten und/oder vermahlenen Schülpe und/oder des abgesiebten Granulats verstanden. Unter vor und/oder während des Pressvorgangs wird ein oder werden mehrere oben genannte Zugabeorte in dem erfindungsgemäßen Verfahren vor dem Fertigstellungsschritt als Granulat verstanden.

In einer bevorzugten Ausführungsform der Erfindung wird das Granulieren bei einer Temperatur im Bereich von 20 bis 100 °C durchgeführt.

Weiterhin können das zur Granulierung eingesetzte Kaliumsulfat-Pulver und/oder die Kaliumchlorid geringe Mengen an weiteren Düngemittelbestandteilen wie beispielsweise Ammoniumsulfat, Ammoniumnitrat, Harnstoff, DAP (Diammoniumphosphat, (NH₄)₂HPO₄), Kieserit oder auch Mikronährstoffe enthalten. Der Anteil dieser weiteren Bestandteile wird in der Regel 10 Gew.-%, bezogen auf das Gesamtgewicht der Salzmischung, nicht überschreiten. Beispiele für Mikronährstoffe sind insbesondere bor-, zink- und manganhaltige Salze. Der Anteil dieser Mikronährstoffe wird in der Regel 5 Gew.-%, insbesondere 1 Gew.-%, bezogen auf das Gesamtgewicht des Kaliumsulfats, nicht überschreiten.

Die mit dem erfindungsgemäßen Verfahren hergestellten Granulate zeichnen sich durch hohe mechanische Stabilität, geringere Staubbildungsrate und gute hygroskopische Beständigkeit aus.

Die zuvor im Zusammenhang mit dem erfindungsgemäßen Verfahren gemachten Angaben hinsichtlich bevorzugter Ausführungsformen treffen auch auf die erfindungsgemäße Verwendung zu.

### BEISPIEL

Das erfindungsgemäße Verfahren, das erfindungsgemäße Kaliumsulfat-Granulat und die erfindungsgemäße Verwendung werden durch die nachfolgenden Beispiele näher erläutert. Die Tabelle 1 zeigt eine Übersicht der durchgeführten Versuche als Beispiele 1 bis 3 mit Art und Menge der verwendeten Komponenten. Als Kaliumsulfat-Pulver kam ein SOP-Feinprodukt der Firma K+S Kali GmbH mit folgenden Eigenschaften zum Einsatz:
SOP-Feinprodukt:
Kaliumsulfat (K₂SO₄): 95,5 Gew.-%
Andere Sulfate (MgSO₄, CaSO₄): 2,6 Gew.-%
Andere Bestandteile, vorwiegend Kristallwasser: 0,9 Gew.-%
Feuchte: 0,2 Gew.-%
Korngrößenverteilung: größer 0,85 mm 1%; 0,5-0,85 mm 3%; 0,25-0,5 mm 12%; 0,15-0,25 mm 22%; 0,09-015 mm 29%; kleiner 0,09 mm 33%;
SGN: 12 (size-guide-number)

Es zeigte sich, dass durch den Einsatz von fein gemahlenem KCI und einer 23 %igen KCI Lösung in Versuch 3 Granulate mit deutlich verbesserten mechanischen Eigenschaften erzeugt werden konnten. Die folgende Tabelle zeigt eine Zusammenfassung der bisher erreichten wichtigsten Ergebnisse. Die Einstellungen der Laborwalzenpresse waren in allen 3 Versuchen gleich.

Es wurden folgende Mischungsvarianten verwendet:

| | |
|---|---|
| • Versuch Nr. 1: | SOP ohne Zusätze (Referenzversuch) |
| • Versuch Nr. 2: | SOP mit 1% Wasser |
| • Versuch Nr. 3: | SOP mit KCl und 23%ige wässrige KCl-Lösung (Ziel:Chloridgehalt max. 2,5 % im Granulat) |

Der Versuch 3 zeigt, dass mit Zunahme des KCI-Gehaltes in der Grundmischung die Festigkeitswerte nach einem bzw. sieben Tag(en) signifikant höher liegen (Berstfeste: 55 N/ 56 N) als in den Vergleichsversuchen bisher. Die Festigkeitswerte können zwar auch durch eine Lagerung wieder sinken (Versuch 2). Es gibt aber bereits erste Indizien dafür, dass durch eine Nachbehandlung mit Wasser noch höhere Berstfesten erreicht werden können.

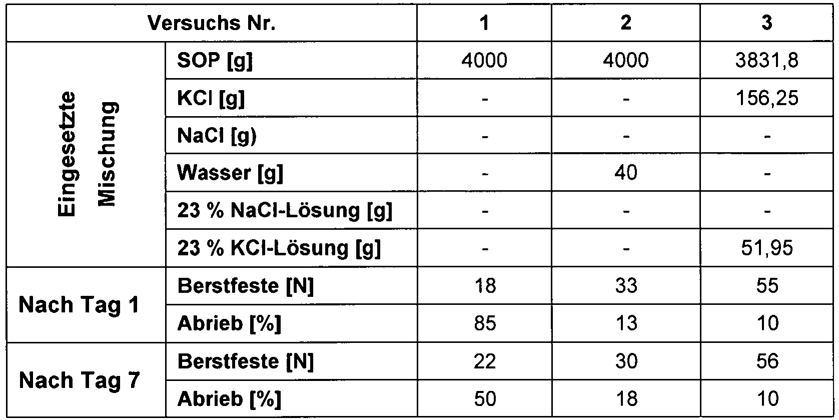

Rechnerisch ergibt sich maximal ein Wasseranteil von rund 2,0 Gewichts% im erhaltenen Granulat. Zur Bestimmung des Glühverlust wurde die Substanz mit Bleioxid abgedeckt, bei 450-600 °C im Muffelofen geglüht und der Gewichtsverlust gravimetrisch ermittelt.

Bei den hergestellten Granulaten wurden Bruchfestigkeit, Abrieb und Restfeuchte nach folgenden Methoden bestimmt:
Die mittleren Bruchfestigkeiten wurden mit Hilfe des Tabletten-Bruchfestigkeitstesters Typ TBH 425D der Firma ERWEKA auf Basis von Messungen an 56 Einzelagglomeraten der Partikelgröße 2,5 bis 3,15 mm ermittelt.

Die Werte für den Abrieb wurden mit dem Rolltrommelverfahren nach Busch bestimmt. Die Werte für Abrieb und Druckfestigkeit wurden an Granalien der Fraktion 2,5 bis 3,15 mm gemessen.

Die Restfeuchte wurde mit dem Halogentrockner Typ HR 73, Fa. Mettler bestimmt.

Die gemessenen Werte wurden direkt nach dem Versuch sowie nach einer Reifezeit, d.h. einer Dauer von 1 und 7 Tagen bestimmt. Während der Reifezeit erfolgte die Lagerung der Proben bei 22°C und 65 % relativer Luftfeuchte. Falls eine Zugabe von Wasser erfolgte, so konnte diese vor dem Pressvorgang oder nach dem Pressvorgang erfolgen. Die Zugabe betrug jeweils rund 2% H₂O.

Für die Pressagglomeration (Versuche 1 bis 3) wurde eine Laborpresse der Fa. Bepex, Typ L200/50 eingesetzt, die zwei gegenläufig rotierende Walzen mit stäbchenförmigen Vertiefungen auf der Walzenoberfläche aufwies (Walzendurchmesser 200 mm, Arbeitsbreite 50 mm). Die Laborpresse wurde mit einer spezifischen Presskraft von bis 30 kN/cm und einer Walzendrehzahl von 6,2 U/min betrieben. Der angewandte Pressdruck wurde so variiert, dass der maximale Wert erreicht war, d.h. bis die Stromaufnahme der Stopfschnecke nahe dem Grenzwert vor dem Ausfall derselben lag.

Die Zerkleinerung der beim Kompaktieren mittels der Laborpresse anfallenden Schülpen erfolgte mit einer Prallmühle der Fa. Hazemag. Die Prallmühle wies 2 Prallwerke auf und hatte einen Rotordurchmesser von 300 mm. Die Spaltweite für das vordere Prallwerk wurde auf 10 mm und für das hintere Prallwerk auf 5 mm eingestellt. Die Prallmühle wurde mit einer Umfangsgeschwindigkeit des Rotors von 15 m/s betrieben.

Als Kaliumchlorid wurde KCI als handelsübliche Laborchemikalie der Fa. Merck eingesetzt.

## Patentansprüche

1. Verfahren zur Herstellung von Kaliumsulfat-Granulaten, **dadurch gekennzeichnet, dass** dem Kaliumsulfat während des Granulierens Kaliumchlorid in einer Menge von 1,8 bis 4,5 Gewichts-%, jeweils bezogen auf das eingesetzte Kaliumsulfat, zugesetzt wird, wobei die Kompaktierung als Pressagglomeration durchgeführt wird.

2. Verfahren nach Anspruch 1, wobei das Kaliumchlorid in Form eines Staubes mit einer maximalen Partikelgröße von 200 µm oder in Form einer wässrigen Lösung zugesetzt wird.

3. Verfahren nach Anspruch 1, wobei ein Teil des Kaliumchlorids in Form eines Staubs mit einer maximalen Partikelgröße von 200 µm und die Restmenge des Kaliumchlorides in Form einer wässrigen Lösung zugesetzt wird.

4. Verfahren nach einem der vorhergehenden Ansprüche, wobei die Menge an zugesetztem Wasser vor oder während des Pressvorgangs im Bereich von 0,1 bis 2,5 Gew.-%, vorzugsweise im Bereich von 0,1 bis 1,5 Gew.-%, besonders bevorzugt im Bereich von 0,3 bis 1,2 Gew.-% und/oder nach dem Pressvorgang im Bereich von 0,1 bis 2,5 Gew.-%, vorzugsweise im Bereich von 0,1 bis 1,5 Gew.-%, besonders bevorzugt im Bereich von 0,1 bis 1,2 Gew.-% und die gesamte Menge an zugesetztem Wasser maximal 3,5 Gew.-%, jeweils bezogen auf wasserfreies Kaliumsulfat ist.

5. Verfahren nach einem der vorhergehenden Ansprüche, wobei die Pressagglomeration ein Kompaktieren des Gemischs aus Kaliumsulfat, Kaliumchlorid und Wasser mit einer Walzenpresse umfasst.

6. Verfahren nach Anspruch 5, wobei die Pressagglomeration ein Kompaktieren des Gemischs aus Kaliumsulfat, Kaliumchlorid und Wasser mit einer Walzenpresse bei einer spezifischen Linienkraft im Bereich von 30 bis 100 kN/cm, vorzugsweise im Bereich von 40 bis 80 kN/cm, besonders bevorzugt im Bereich von 45 bis 75 kN/cm, bezogen auf 1000 mm Walzendurchmesser und eine mittlere Schülpendicke von 10 mm umfasst.

7. Verfahren nach Anspruch 5 oder 6, wobei das Kompaktieren des Gemischs aus Kaliumsulfat, Kaliumchlorid und Wasser mit einer Walzenpresse durchgeführt wird und eine anschließende Zerkleinerung und Klassierung der beim Kompaktieren erhaltenen Schülpen umfasst.

8. Verfahren nach einem der vorhergehenden Ansprüche, wobei die Schülpen nach dem Pressvorgang, insbesondere während der Zerkleinerung und/oder Klassierung mit Wasser befeuchtet werden.

9. Verfahren nach einem der vorhergehenden Ansprüche, wobei man das Granulieren bei einer Temperatur im Bereich von 20 bis 100°C durchführt.

10. Kaliumsulfat-Granulat, erhältlich durch ein Verfahren nach einem der vorhergehenden Ansprüche.

11. Kaliumsulfat-Granulat, nach Anspruch 10, mit einem Kaliumchlorid-Gehalt im Bereich von 1,8 bis 4,5 Gew.-% bevorzugt 2,5 bis 4,3 Gew.-%, gerechnet als Gewichtsanteil des eingesetzten Kaliumchloridsalzes jeweils bezogen auf das eingesetzte Kaliumsulfat.

12. Verwendung von Kaliumchlorid zur Verbesserung der mechanischen Eigenschaften von Kaliumsulfat-Granulaten, insbesondere zur Erhöhung der Berstfestigkeit und/oder zur Erhöhung der Abriebfestigkeit.

## Claims

1. Process for the preparation of potassium sulphate granules, **characterised in that** potassium chloride is added to the potassium sulphate during granulation in the amount of 1.8 to 4.5 wt%, based in each case on the potassium sulphate used, whereby the compaction is performed as press agglomeration.

2. The method of Claim 1, wherein the potassium chloride is added in the form of a dust having a maximum particle size of 200 µm or in the form of an aqueous solution.

3. The method of Claim 1, wherein a portion of the potassium chloride is added in the form of a dust having a maximum particle size of 200 µm and the residual amount of the potassium chloride in the form of an aqueous solution.

4. Method according to one of the preceding claims, wherein the amount of water added before or during the pressing process is in the range of 0.1 to 2.5 wt%, preferably in the range of 0.1 to 1.5 wt%, particularly preferable in the range of 0.3 to 1.2 wt% and/or after the pressing process in the range of 0.1 to 2.5 wt%, preferably in the range of 0.1 to 1.5 wt%, particularly preferable in the range of 0.1 to 1.2 wt% and the total amount of water added is at most 3.5 wt%, each with respect to anhydrous potassium sulphate.

5. A method according to any one of the preceding claims, wherein the press agglomeration comprises of compacting the mixture of potassium sulphate, potassium chloride and water with a roller press.

6. A method according to Claim 5, wherein the press agglomeration comprises of compacting the mixture of potassium sulphate, potassium chloride and water with a roller press with a specific linear force in the range of 30 to 100 kN/cm, preferably in the range of 40 to 80 kN/cm, most preferably in the range from 45 to 75 kN/cm, based on a 1000 mm roller diameter and an average flake thickness of 10 mm.

7. A method according to Claim 5 or 6, wherein the compaction of the mixture of potassium sulphate, potassium chloride and water is performed with a roller press and includes subsequent comminution and classification of the flakes obtained from compaction.

8. Method according to one of the preceding claims, wherein the flakes are moistened with water after the pressing process, in particular during comminution and/or classification.

9. A process according to any one of the preceding claims, wherein the granulation is performed at a temperature in the range of 20 to 100 °C.

10. Potassium sulphate granules obtainable by a process according to any one of the preceding claims.

11. Potassium sulphate granules according to claim 10, having a potassium chloride content in the range of 1.8 to 4.5 wt%, preferably 2.5 to 4.3 wt%, calculated as the proportion by weight of the potassium chloride salt used in each case based on the potassium sulphate used.

12. Use of potassium chloride for improving the mechanical properties of potassium sulphate granules, in particular for increasing the bursting strength and/or for increasing abrasion resistance.

## Revendications

1. Procédé de fabrication de granulés de sulfate de potassium, **caractérisé en ce qu'**on ajoute du chlorure de potassium au sulfate de potassium pendant la granulation en une quantité de 1,8 à 4,5 du pourcentage en poids, chaque fois par rapport au sulfate de potassium utilisé, le compactage étant effectué sous forme d'agglomération par pressage.

2. Procédé selon la revendication 1, dans lequel le chlorure de potassium est ajouté sous forme d'une poussière avec une taille de particules maximale de 200 µm ou sous forme d'une solution aqueuse.

3. Procédé selon la revendication 1, dans lequel une partie du chlorure de potassium est ajoutée sous forme d'une poussière ayant une taille de particules maximale de 200 µm et la quantité résiduelle du chlorure de potassium est ajoutée sous forme d'une solution aqueuse.

4. Procédé selon l'une des revendications précédentes, dans lequel la quantité d'eau ajoutée avant ou pendant le procédé de pressage est comprise entre 0,1 et 2,5 du pourcentage en poids, de préférence dans la plage comprise entre 0,1 et 1,5 du pourcentage en poids, de façon particulière entre 0,3 et 1,2 du pourcentage en poids, et/ou après le pressage dans la plage de 0,1 à 2,5 du pourcentage en poids, de préférence dans la plage comprise entre 0,1 et 1,5 du pourcentage en poids, de façon particulière dans la plage comprise entre 0,1 et 1,2 du pourcentage en poids, et la quantité totale d'eau ajoutée est au maximum de 3,5 du pourcentage en poids, sur la base du sulfate de potassium anhydre dans chaque cas.

5. Procédé selon l'une des revendications précédentes, dans lequel l'agglomération par pressage comprend le compactage du mélange de sulfate de potassium, de chlorure de potassium et d'eau avec une presse à rouleaux.

6. Procédé selon la revendication 5, dans lequel l'agglomération par pressage comprend le compactage du mélange de sulfate de potassium, de chlorure de potassium et d'eau avec une presse à rouleaux avec une force de ligne spécifique comprise entre 30 et 100 kN/cm, de préférence dans une plage comprise entre 40 et 80 kN/cm, de façon particulière entre 45 et 75 kN/cm, sur la base de 1000 mm de diamètre de rouleau et d'une épaisseur moyenne des écailles de 10 mm.

7. Procédé selon la revendication 5 ou 6, dans lequel le compactage du mélange de sulfate de potassium, de chlorure de potassium et d'eau est effectué à l'aide d'une presse à rouleaux et comprend le broyage et le classement ultérieur des flocons obtenus pendant le compactage.

8. Procédé selon l'une des revendications précédentes, dans lequel les écailles sont humidifiées avec de l'eau après l'opération de pressage, en particulier pendant le broyage et/ou le classement.

9. Procédé selon l'une des revendications précédentes, dans lequel la granulation est effectuée à une température comprise entre 20 et 100°C.

10. Granulés de sulfate de potassium pouvant être obtenus par un procédé selon l'une des revendications précédentes.

11. Granulé de sulfate de potassium, selon la revendication 10, ayant une teneur en chlorure de potassium comprise dans une plage entre 1,8 et 4,5 du pourcentage en poids, de préférence entre 2,5 et 4,3 du pourcentage en poids, calculée en proportion du poids du sel de chlorure de potassium utilisé dans chaque cas par rapport au sulfate de potassium utilisé.

12. Utilisation de chlorure de potassium pour améliorer les propriétés mécaniques de granulés de sulfate de potassium, en particulier pour augmenter la résistance à l'éclatement et/ou pour augmenter la résistance à l'abrasion.
